Europäisches Patentamt

European Patent Office

Office européen des brevets

(11) Publication number: **0 001 667**
**B1**

(12) **EUROPEAN PATENT SPECIFICATION**

(45) Date of publication of patent specification: **09.06.82**

(21) Application number: **78200252.1**

(22) Date of filing: **17.10.78**

(51) Int. Cl.³: **A 01 J 7/00, F 16 J 15/02**

(54) **Cluster remover.**

(30) Priority: **18.10.77 NL 7711458**
**06.10.78 GB 3954778**

(43) Date of publication of application:
**02.05.79 Bulletin 79/9**

(45) Publication of the grant of the patent:
**09.06.82 Bulletin 82/23**

(84) Designated Contracting States:
**BE CH DE FR LU SE**

(56) References cited:
**BE - A - 845 044**
**DE - A - 1 582 963**
**GB - A - 809 111**
**US - A - 3 480 038**

**LANDBOUWMECHANISATIE, vol. 26, March 1975; publisher: Stichting "Landbouw-Mechanisatie-Pers", Mansholtlaat 12, Wageningen NL "Waikato afneemapparatuur voor melkstellen", pages 271, 272.**

(73) Proprietor: **Kummer Electronics B.V.**
**Oostergrachtswal 91-95**
**NL-8921 AB Leeuwarden (NL)**

(72) Inventor: **Kummer, Jan**
**Oostergrachtswal 93**
**Leeuwarden (NL)**

(74) Representative: **Mensen, Herbert, Ir.**
**Octrooibureau Polak & Charlouis Laan Copes Van Cattenburch 80**
**NL-2585 GD Den Haag (NL)**

(56) References cited:
**LANDBOUWMECHANISATIE, vol. 24, November 1973; publisher: Stichting "Landbouw-Mechanisatie-Pers", Mansholtlaan 12, Wageningen NL "Automatisch afnemen van melkstellen", page 1049.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Cluster-remover

The present invention relates to a cluster-remover for a milking cluster with accessories, comprising, when operatively mounted, a horizontally positioned piston-cylinder assembly acting as a cluster-lifting mechanism, a valve cooperating therewith for admitting or obturating vacuum to the cylinder, and a milk flow indicator, that controls said valve electronically, the accessories (valve and indicator) being located within a separate casing, said piston being provided with a wind-up system including at least a pulley, rigidly connected to the cylinder, and a pulley, rigidly connected to the piston, around which pulleys a string is passed, of which the leading end is connected to the cylinder, and the trailing end carries the cluster suspended thereon. A cluster-remover of this kind is known from an Article in "Landbouw-mechanisatie 26 (1975) 3 (March) pages 271—274, by Messrs. Veldman and Kerkhof, in which an automatic cluster-remover is discussed.

Cluster-removers of this type are used in sheds. Per each pair of two stands for cows a junction is provided on the lines so that these lines can be connected to the hoses of the cluster.

As soon as the milk yield falls below 0,2 l/min., the milk indicator gives a signal to the valve mechanism causing the vacuum on the teat cups to be closed and the vacuum to the piston of the lifting mechanism to be opened. This lifting mechanism ensures that the cluster is disengaged from the udder of the cow and is lifted, without it being necessary for the farmer to look after it, as this was the case in the past, when the teat-cups remained on the teats, which created a disadvantageous, anyway unnatural situation for the cow's udder which was milked out.

Since the accessories are suspended on one of the lines, and the accessories themselves are equipped with a suspension facility for the cluster in the non-active position, it is clear that the cluster has to cover a relatively great distance when moving from the active position (underneath the udder) towards this non-active position. The risk is great that the cluster will drag over the shed's floor, which for hygienic considerations is very undesirable.

In accordance with an elder proposition Netherlands Patent Application 7708620 a tubular lever is therefore provided on or with the accessories to bridge this distance. During lifting up of the lever, the string on which the cluster is suspending, remains under tension, so that the cluster cannot come in touch with the shed's floor. This lever can be mounted pivotally on a vertically disposed container, in which the lifting mechanism and other components of the accessories may be stored. For many semi-mechanised sheds this proposition has been favourable. There are, however, cow-sheds ("grupstallen"), which have such a low roofing (less than 2 m height at the place of the vertical struts) that the equipment mentioned cannot be installed. In other words the distance of the hinge point of the lever to the roof is shorter than the length of the lever, so that the latter cannot be tilted upward into a complete vertical position. This also holds for the container, in which the lifting mechanism is stored. Therefore a wind-up system for the string is cooperating with a piston-cylinder assembly activated by the vacuum that is used for the milking action proper.

The piston with pulleys is placed, if it were, within the lifting tube, so that a much more direct force can be transferred on the string carrying the cluster. By this solution the height of the container, in which the components belonging to the accessories are, can be reduced considerably (from 1.5 m to 0.25 m).

Although a cluster-remover is not an apparatus that is installed stationarily near one and the same cow, but an apparatus that must be displaceable from one pair of cow's to another pair, yet steps have been taken that it can be mounted to various places along the milk-line tightly but detachably. It appears, however, that a cow during the milking process, although bound to a post in the shed, can step on the milk hose or the string of the remover. It will be clear that if the hose or string does not yield, serious damage can be caused to the installation or even to the animal itself.

In order to overcome this problem the invention makes the proposal that said separate casing functions as supporting frame for the cylinder of the piston-cylinder assembly and that this supporting frame is detachably connected, through a horizontally swingable suspension means, to a bearing block rigidly mounted on the piping system in the cow shed, in which a semi-rigid, semi-flexible direct connection exists between the cylinder and supporting frame or between the supporting frame, and bearing block. The term "semi-rigid, semi-flexible" has the following meaning: it means that in normal circumstances the connection is rigid, only in abnormal circumstances the rigid connection is eliminated and is passed on into a flexible connection. As soon as the abnormal circumstances are over, the rigid connection is restored again.

After expiration of the abnormal situation there are two possibilities to return to the normal position, viz. the connection is restored either manually or automatically.

According to a further characteristic of the invention the latter possibility has been elaborated such that said semi-rigid, semi-flexible connection is established between the supporting frame and the cylinder, said connection being in abnormal operation partially breakable, whereas the cylinder is constantly subjected to a biasing force in the direction of the supporting frame.

According to another feature after the milking operation during the drawing-in of the piston plus pulling string, in normal operation, the biasing force on the piston is increased with a force to be derived from the vacuum on the back side of the piston, which vacuum is interrupted in abnormal operation.

The flexible coupling can be realised in various manners. Preferably in accordance with the invention it can be realised such that the end of the cylinder or lifting tube facing the supporting frame cooperates with the opposite surface of the supporting frame under the influence of a biasing force and in sealing relationship therewith through a centring tonque and groove engagement.

The biasing force required can be supplied by compression springs or tensions springs, a counter-weight, etc. In the embodiment with compression springs a flange is provided on the end of the lifting tube facing the supporting frame, whereas a number of hook means is mounted on the supporting frame, which hook means grip around the flange, a compression spring being provided therebetween.

The flexible coupling can, of course, also be realised with tension springs. In that case accordingly the lifting tube is flexibly connected to the supporting frame by means of one or more tension springs disposed along the circumference.

In a third case and in accordance with the invention the lifting tube is coupled flexibly to the supporting frame by means of a cable, string or the like, with counterweight.

In this way the lifting tube, when it is imparted a blow by a cow, will have the possibility to give way and the possibility to leave temporarily the centring groove, but due to the repelling force constantly exerted on the lifting tube, it will return to the centring groove. It is true, during the time the lifting tube is giving way, the sealing is broken so that the vacuum behind the piston is disturbed. If such a blow against the cylinder occurs during lifting of the cluster, so when the piston under influence of the vacuum is moving under gravity of the cluster (6 kg) in a direction away from the supporting frame. This interruption is, however, of short duration. If the tension of compression or tension springs or counterweight is great with respect to the weight of the cluster, the vacuum sealing is soon restored and also the vacuum near the piston, so that the latter can resume its movement towards the supporting frame.

It is also possible that a cow steps on the string without any special reason. In this case too, the lifting tube gives way and the piston is moving away from the supporting frame, so that the string with cluster is paid out and no unnecessary and inadmissible forces are exerted on the tubes of the cluster. When the cow lifts her leg, the lifting tube can return in the centring groove and the vacuum can be restored, after which the interrupted milking process or lifting process of the cluster can be resumed.

The desired sealing can be obtained by providing on the bottom of the groove a ring of flexible sealing material. Better is it, however, when on the end of the tube facing the supporting frame a flange is mounted provided with an annular centring edge of flexible, sealing material. This flexible centring edge can, for example, taper in a channellike groove or can be straight and then cooperate with a tapered groove.

Just because the centring edge at a blow against the lifting cylinder, due to the repelling force, does not undergo a purely axial displacement towards the centring groove, but a somewhat swiveling movement, the centring edge can become stuck in a slanting position within the centring groove, whereas nevertheless the sealing is not perfect.

Even if the flexible centring edge falls well in the centring groove, a seal is obtained in the form of a circular-line contact, which can readily be disturbed by a dust particle or the like.

To meet these objections the lifting tube, near its end facing the supporting frame, is provided with a centring edge cooperating with a relatively wide centring groove in the supporting frame, while on the outer side of the tube a resilient sealing ring is provided that cooperates with the surface of the supporting frame surrounding the centring groove. With this construction the edge of the tube can leave the groove easily, if the tube has to catch a blow and, on its return to equilibrium, still a good seal will be obtained again.

In the latter case it is preferred that around the end of the lifting tube facing the supporting frame and around the biasing means is disposed a sleeve mounted on said lifting tube. This sleeve cooperates with a centring groove of greater diameter, so that in comparison with the previously mentioned cases the centring edge under blows of comparable force will leave the centring groove less fast and therefore the seal will be broken less fast.

Both sealing structures can be improved when in accordance with the invention the sealing ring is provided with a slanting, projecting annular lip, resting, in the equilibrium state of the lifting tube, against the supporting frame. This lip contacts the supporting frame by way of a surface contact. With great deviations, it is true, the contact will be broken, but when the lifting tube with its centring edge is returned in the centring groove, the lip ensures a perfect sealing. For small deflections of the lifting tube from the quilibrium state, for example, due to load fluctuations, this contact will not even be broken.

In all these cases the centring groove and the centring edge can be exchanged mutually. That means the centring edge will most times be provided on the mobile part of the flexible coupling, the centring groove on the stationary part of it. It is, however, possible to modify the construction such that the centring groove — or other centring means, is on the mobile part and the centring edge on the stationary part (i.e. the supporting frame) of the coupling.

When the supporting frame is not rigidly mounted on the milk or vacuum line, and the lifting tube is also swingable about a vertical axis by the fact that the supporting frame is rotatable journalled in two trunnions, the flexible coupling of the lifting tube with the supporting frame has the advantage that blows against the lifting tube do not exert intolerable forces on the pivots or similar suspension points.

To the supporting frame belongs still a bearing block, the bearings of which cooperating with the trunnions of the bearing frame.

To establish a simple mounting and disconnection of the supporting frame to a bearing block, each bearing is provided with an opening having a radially outwards extending slot of reduced area. The portion of the trunnion projecting beyond the supporting frame is constituted as a neck with relatively small diameter and a head with greater diameter with inbetween a transition part. The neck can pass through the slot without more ado, after which the transition part falls in the opening and then rests with the head on the edge of the opening. At the lower side the construction is similar.

Due to a special construction the trunnions are balanced out in their bearings. Normally with a vertical suspension the upper trunnion will load the upper bearing more heavily than the lower pivot which is supported a little.

This objection can be eliminated in that the bearings comprise a spring-loaded, adjustable, horizontal support, on which the supporting frame or part thereof is resting in mounted position for relieve of the trunnions in the bearings. The spring pressure is adjustable such that the heads of both trunnions are spaced from their bearing the same distance and so neither of them rests on the bearing; therefore less friction. Additionally, the horizontal supporting plate is constituted by one of the bearings, which acts as a hinge by rotating about an axle, around which a torsion spring is wound for supplying the repelling force.

The invention will be explained with reference to the figures of the enclosed drawings.

Fig. 1 shows a cow-shed, in which a cluster-remover according to the invention is applied;

Fig. 2 is a schematic drawing of the modified lifting mechanism, in which between lifting tube and frame a flexible coupling is provided whilst making use of compression springs;

Fig. 3 is a schematic drawing of a flexible coupling in which tension springs are applied;

Fig. 4 is a schematic drawing of a flexible coupling in which a counterweight is being used;

Fig. 5 is a schematic drawing at enlarged scale of part of a sealing zone according to detail V in Fig. 4;

Fig. 6—10 are schematic drawings, showing a number of other possibilities of parts of sealing zones applied with a flexible coupling according to the invention;

Fig. 11 represents a construction drawing of a lifting tube swingable about a vertical axis in accordance with the invention;

Fig. 12 represents at enlarged scale part of a sealing zone according to detail XII in Fig. 11; and

Fig. 13 and 13A show a view of an embodiment, applied in practice, which has been modified in several respects, compared with the embodiment of Fig. 11.

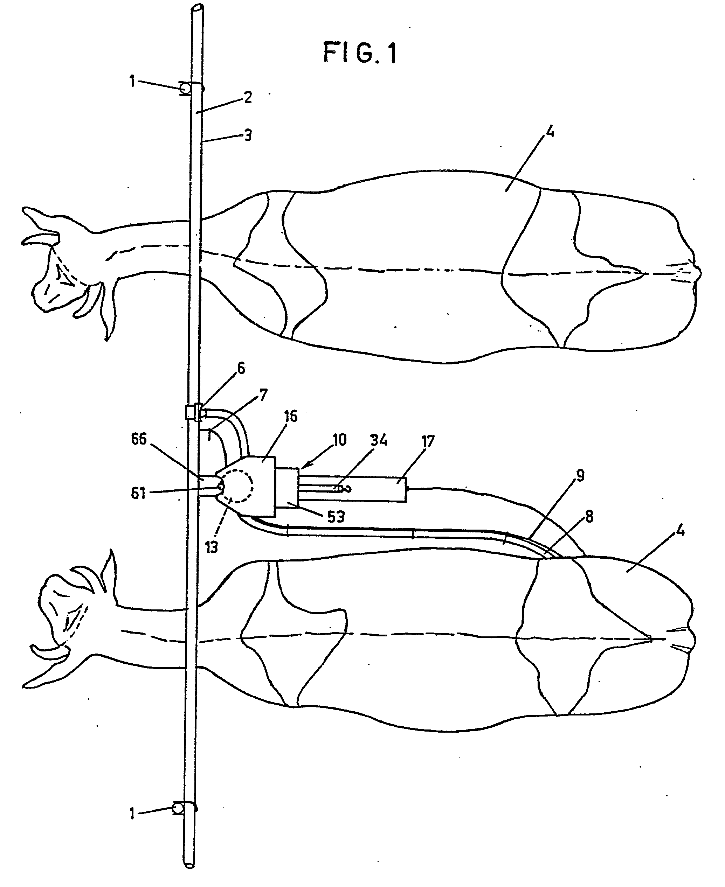

In Fig. 1 a plan view is shown of a cow-shed having therein vertical struts 1, on which a milk line 2 and a vacuum line 3 are mounted. For milking cows 4 there is per each pair of cows a junction 6 on the milk line and a junction 7 on the vacuum line, which junctions can be connected to milk hose 8 and vacuum tube 9 of a cluster, not shown.

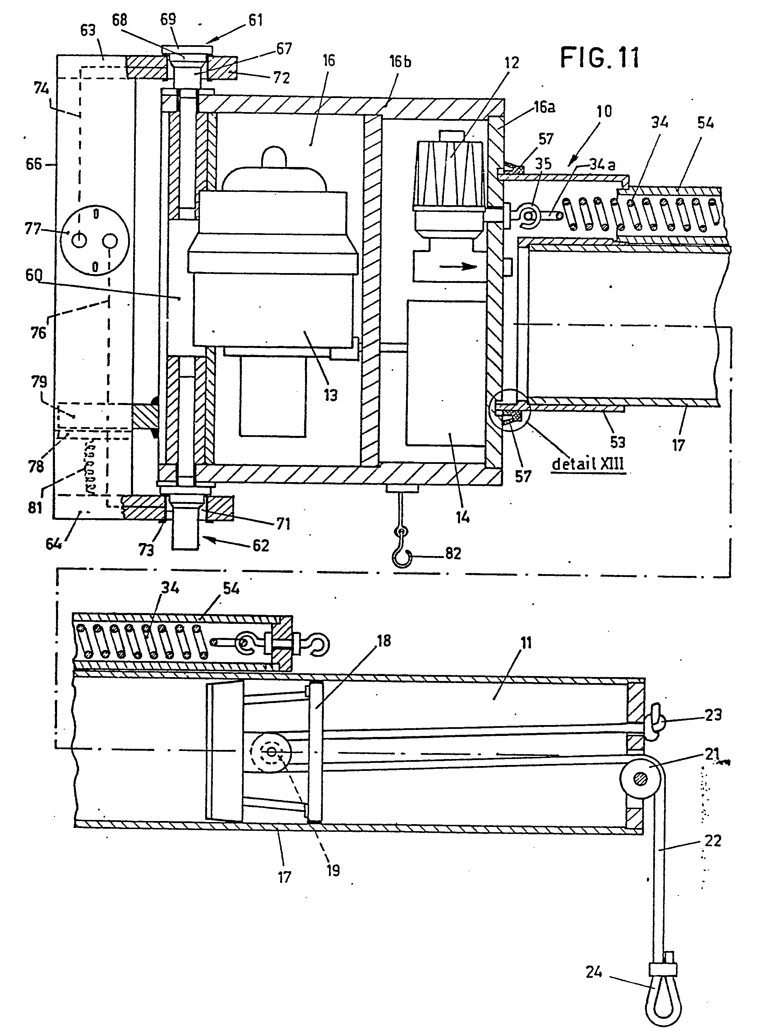

The milkset-accessories, in Fig. 1 indicated generally with 10, comprises on the one hand a lifting mechanism 11 incorporated in a lifting tube 17, and on the other hand a vacuum valve 12, a flow indicator 13 and an electronism 14, which in accordance with Fig. 11 are included in a supporting frame 16 for the lifting tube 17, said frame being near the junctions 6, 7 removably mounted on the lines 2, 3.

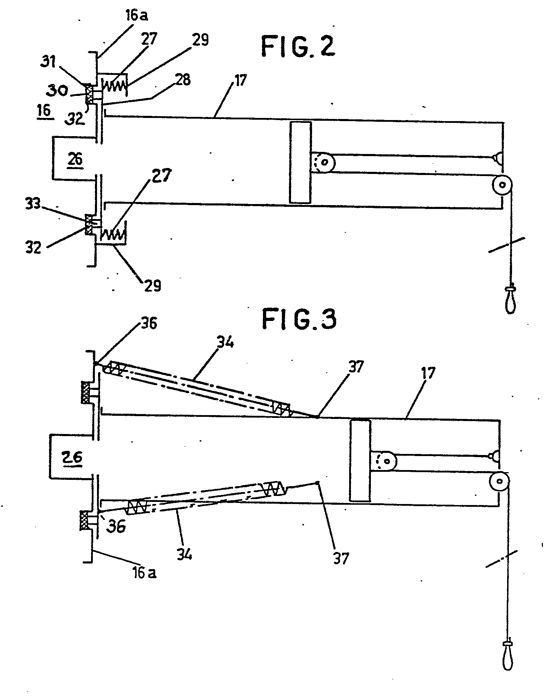

In Fig. 2 and the following figures the typical behaviour of animals has been considered, which with their movements could damage rigidly mounted installations. Therefore the lifting tube 17, with which the cow can exert relatively big forces, is coupled with the supporting frame 16 in a semi rigid — semi flexible way. This ambivalent character originates from the fact that if a vacuum resides behind the piston 18, then two kinds of forces, viz. atmospheric pressure and the repelling force, are exerted on the tube 17; whereas if the vacuum is broken, only the repelling force acts on it. In the first case the coupling may be seen as a rigid connection between the lifting tube 17 and the wall 16a of the supporting frame 16. Only if a force is exerted on the tube, exceeding this sum-force the resistance offered by this sum-force will drop rather strongly. For, since the vacuum is broken, the atmospheric pressure in this sum-force falls away, so that suddenly the tube does no longer offer much resistance and so gives way.

The repelling force in this semi rigid — semi flexible coupling is supplied in the Fig. 2 embodiment by a compression spring, by way of one big torsion spring or a numer of smaller torsion springs spaced aroung the periphery of tube 17. The compression spring(s) 27 is (are) inserted between a flange 28 mounted on the end of the tube 17 facing the wall 16a and a number of hookshaped means 29 gripping over this flange 28 and the compression spring 27, said means being spaced along a circle of the wall 16a. In this wall is further provided a centring groove 31 having on the bottom 30 a sealing ring 32, whereas the flange 28 is provided with a centring edge 33. The lifting tube 17 can in this way catch every blow, from whatever direction, and will on that occasion make a tilting movement to describe about the reaction point, as soon as the force of the blow exceeds the above sum-force. At a purely vertically directed blow the point of reaction will be in the lowest point of the contact circle between centring edge 33 and centring groove 31. However strong this tilting movement may be, the centring edge will always remain in contact with the centring groove close to the point of reaction, so that there is no risk that the centring edge would leave the centring groove. A contribution to that effect is, of course, supplied by the repelling force of the spring or springs 27.

In Fig. 3 the compression spring has been replaced by a set of three tension springs 34, whose points of application 36, 37 with the wall 16a and the tube 17 are spaced along the circumference. Other numbers are also possible; one could even suffice with one tension spring.

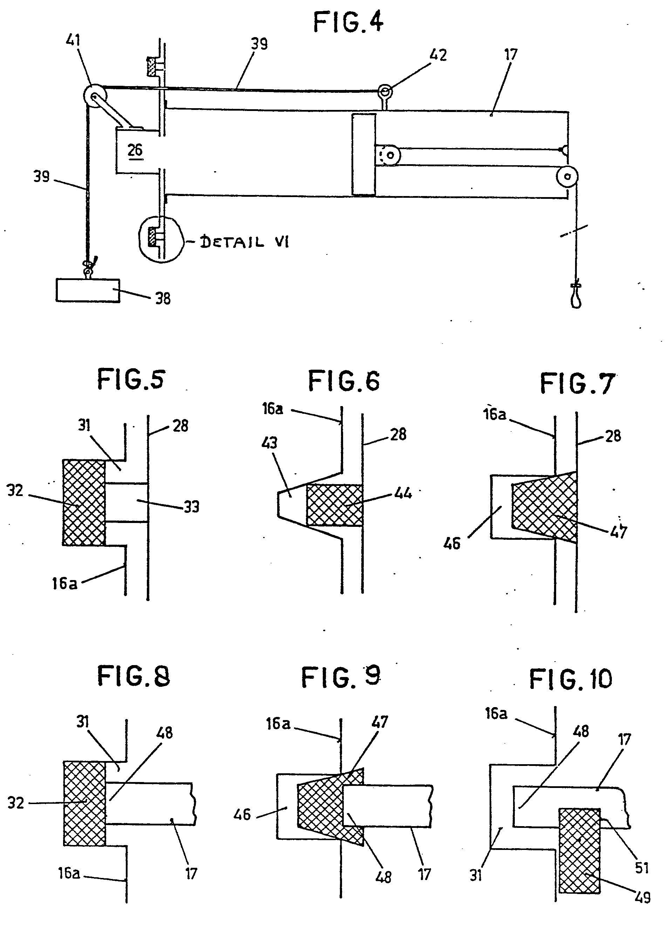

In Fig. 4 the springs have been replaced by an installation with counterweight 38, string 39, stationary pulley 41 and point of attachment 42 on the tube 17.

Other means for exerting a continuous — if any additional — repelling force on the lifting tube 17 are likewise possible, such as pressurized air, which is available in many modern sheds in the form of a pressurized airline, or else may be derived from a gas-cylinder. Or small piston-cylinder sets, of which a number — as in the case with the tension springs — are arranged around the tube 17 and are driven pneumatically or hydraulically in order to exert a continuous repelling force on the tube 17 towards the supporting frame 16.

In Fig. 5 is shown a detail of the sealing means as applied in Fig. 4, as also already discussed in connection with Fig. 2.

In Fig. 6 is shown a conical centring groove 43, which cooperates with a centring edge 44 of sealing material secured to the flange 28.

In Fig. 7 a cooperation can be observed between a rectangular or channelshaped centring groove in the wall 16a and the conical centring edge 47 on the flange 28.

In Fig. 8 is shown an alternative of the sealing means of Fig. 5. In this case the end of tube 17 facing toward the wall 16 is used as centring edge 48.

Fig. 9 is an alternative of the sealing means of Fig. 7, in which the conical centring edge 47 is affixed to the edge of the tube 17 facing the wall 16a.

In the construction of Fig. 10 a flat sealing ring 49 is provided at such a distance from the centring edge 48 in a circumferential groove 51 of the lifting tube 17 that this ring makes a sealing contact with that part of the wall 16a that is situated around the centring groove 31. In this construction, likewise in that of Fig. 5 and 8 use can be made of a relatively wide groove 31.

In Fig. 11 is shown a working drawing of a cluster remover according to the invention with a semi rigid — semi flexible coupling between the lifting tube 17 and the wall 16a of the supporting frame 16. To this effect the point of application 36 of the spring 34 is constructed as a hinge which forms a coupling between an eye 34a of the spring 34 and a hook 35 mounted in the wall 16a of the supporting frame 16.

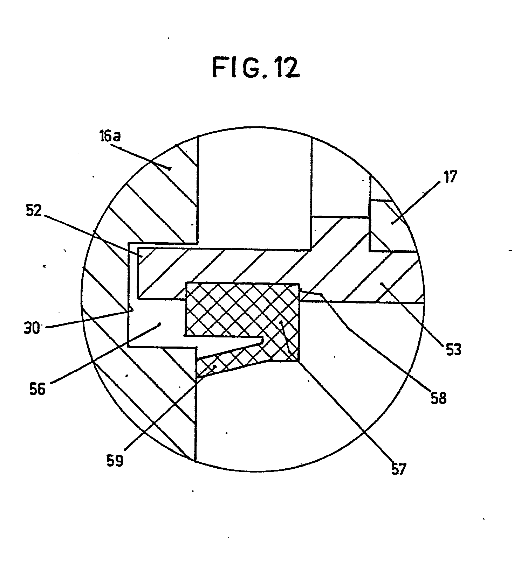

In this construction the centring edge 52 is not supplied by the lifting tube 17 or the flange 28, but by a sleeve 53, telescopically fitting about the lifting tube 17 and about the housing 54 of the spring 34. The centring edge 52 engages in a relatively wide centring groove 56. Also in this case, as in Fig. 10, a sealing ring 57 is applied, which is provided in a circumferential groove 58 of the sleeve 53. Due to this construction with the sleeve 53 the tilting angle of the lifting tube 17 is smaller in the case of shock or impact loads. Since the sealing ring 57 is provided with an outwards projecting lip 59 (Fig. 12), which in equilibrium is subjected already to a certain elastic pretension, the risk that with a small shock load the sealing contact and at the same time the vacuum is broken, will be extremely small, which is also due to the smaller tilting angle of the tube. Small fluctuations will therefore less often lead to disruption of the sealing contact. With heavy shock loads the deviation will however be big such that the contact and the vacuum is indeed broken, which is necessary, since the construction, particularly the lifting tube, at such big forces, must be able to give way.

The lifting tube 17 coupled with the supporting frame 16 is swingable around a vertical spindle 60. The housing 16b of the supporting frame 16 is, for this purpose, provided with rotatable pivots or trunnions 61, 62 which can readily be suspended in bearings 63, 64 of a bearing block 66 mounted on one of the lines 2, 3. For that end, each trunnion is provided with a neck 67, a transition part 68 and a head 69. Each bearing 63, 64 is provided with an opening 71 and a small radial slot 72, through which the neck 67 can just pass. The opening 71 is surrounded by a metal sleeve 73.

These sleeves 73 are in contact, through internal wires 74 and 76, with socket 77 for the current supply through the trunnions 61 and 62 on the electronic-electrical apparatus of the accessories of the cluster in the supporting frame 16. When putting the trunnions 61, 62 of the supporting frame 16 in the bearings 63, 64 of the bearing block 66, the electrical current supply is closed at the same time.

In the bearing block 66 is further included a supporting plate 78, which serves to support resiliently a supporting member 79, being mounted on the housing 16b, by means of a spring 81. By this construction the location of the head 69 of the trunnions 61, 62 can be adjusted with respect to their bearing 63, 64 concerned, so that the trunnions rest with, at least equal friction, in the bearings.

Both this flexible balancing and the flexible coupling between lifting tube 17 and supporting frame 16 make that care is taken of eliminating undesirable and unequal loads on the trunnions 61, 62.

On the supporting frame 16 a suspension hook 82 can be provided to suspend the clusters in the rest-position.

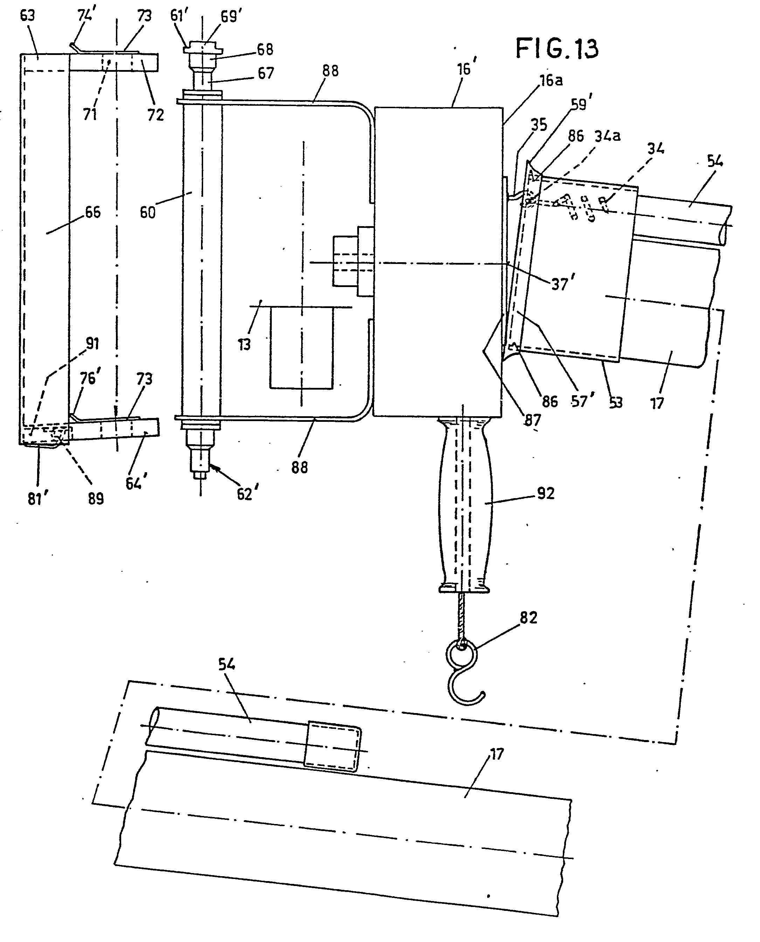

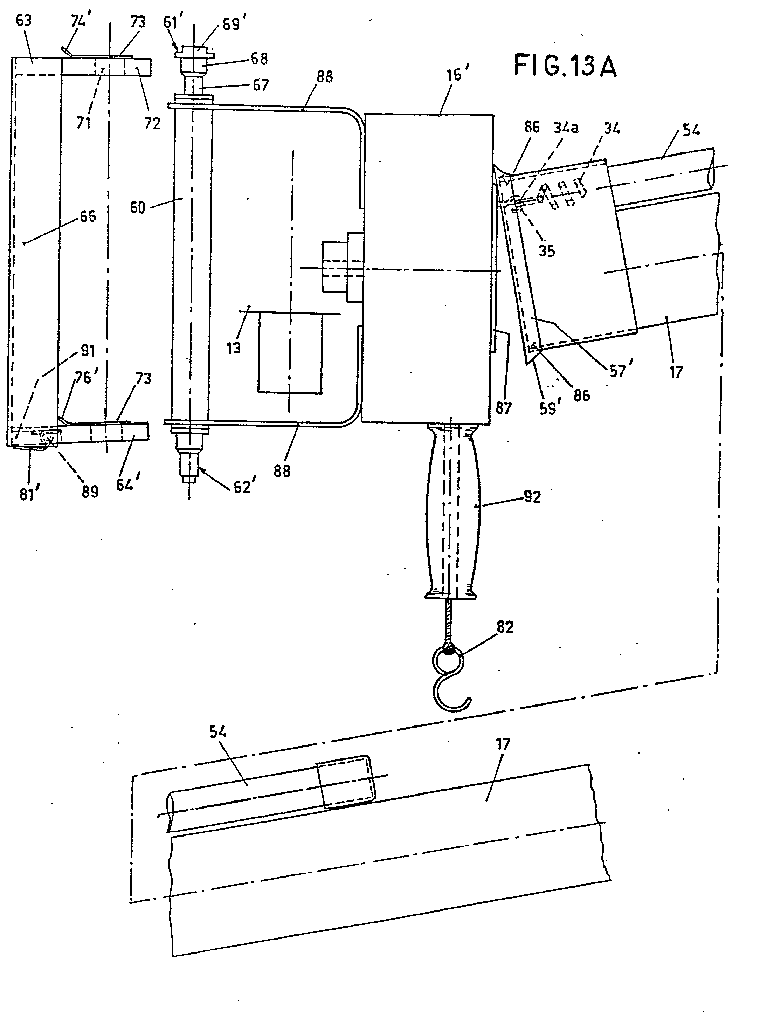

In the practical embodiment shown in view in Fig. 13 and 13A, only deviating now here now there from the construction of Fig. 11, the lifting tube 17 is shown in the bent-open position. Owing thereto the way of sealing and centring applied in this embodiment is visible. For a correct centring the inner edge 86 of the sleeve 53 cooperates with a dis-shaped protrusion 87 on the face 16a of the frame-casing 16'. The sealing is realised by a sealing-ring 57', having an inclined lip 59' which protrudes sufficiently beyond the edge 86 to obtain a good sealing contact between the sealing ring 57' and the surface 16a.

It can easily be noted, that the hook 35, with which the spring 34 is coupled with the frame-casing 16 or 16', forms together with the eye 34a of the spring 34 a hinge to establish a certain flexibility of the frame-lifting tube connection 16, 17.

The supporting frame 16', contrary to the frame 16 of Fig. 11, is restricted to an enclosed space or casing for the vacuum valve 12 and the electronism 14. The flow indicator 13 is now lacated outside the enclosed portion of the supporting frame 16'. To this frame belong also straps or hook supports 88, between which the spindle 60 with pivots 61, 62 is provided.

The bearing block 66 has been drawn separately. The supporting plate 78 and the spring 81 are now incorporated in a new lower bearing 64', which can hinge about an axle 89 around which is wound, in a recess 91, a torsion spring 81'. The bearing block 66 is rigidly mounted in the shed, viz. at each place where two cows can be milked. The supporting frame 16' with lifting tube 17 can be inserted with its pivots 61, 62 readily in the slots 72 and suspended in the openings 73 recessed in the bearings 63 and 64'. By doing so the hinge-like bearing 64' being pretensioned a little inwards, is tilted downwards to a horizontal position against the action of the torsion spring 81'. In this way the load of the cluster with accessories is equally divided over both bearings 63, 64'. The supporting member 79 (Fig. 11) can therefore be omitted.

At the lower side of the supporting frame 16' a handle 92 is provide, so that the complete apparatus can be handled more easily during transportation from one bearing block 66 to the other.

The possibilities of the apparatus to bend-open being established in Fig. 13 between the frame 16' and the lifting tube, can also be realised in other places, for example in the hooked straps 88 or in the bearings 63, 64.

The bending-open shown in Fig. 13A takes place when a cow with her head or shoulder strikes against the lifting tube. However this situation occurs in practice very rarely.

More frequently it happens that the cow with one of her legs steps on the string of the milking cluster, so that the string 22 and also the supporting frame 16 would be loaded too heavily. Two cases can be distinguished:

a. there is no vacuum. The piston 18 in the cylinder 17 is located on the extreme right. It is the moment that milking is still going on or has just ended and as soon as the vacuum has been transferred from the udder to the piston-cylinder assembly, the piston can move to the left and can lift the milking-cluster, which is now still being hampered by the cow's leg. Since there is no vacuum in the piston-cylinder assembly, the only force trying to resist the force exerted by the cow on the string, is the force supplied by the coil spring 34. So this spring will give away a little, so that the construction bends open as shown in Fig. 13, just enough to prevent overload of the lifting system, the trunnions, and the bearings.

b. there is a vacuum. This is the situation that the piston 18, under the influence of the vacuum residing in the cylinder 17, is moving to the left, and simultaneously the cluster is moving upwards. If now the cow with one of her legs steps on the string, for example, of the milking cluster, there are, apart from the force of the cow's leg, two other forces that play a part in it, viz. the vacuum in the cylinder and the force of the spring, which may be counted up. It is well-known that a cow with her hind-leg can exert a great destructive force. This force is so big that it can easily exceed the sum of both said above forces, so that the lifting construction, anyhow, bends open. At that same moment the vacuum is broken, rendering the sum-force suddenly smaller. Consequently the piston will pitch abruptly to the right so that damage of the hoses or tubes, the lifting system, suspension system etc. is avoided.

As long as a cow does not step on the hoses, there is question of a rigid connection. However, as soon as a cow steps on the string, or with her legs kicks backwards where the cluster is, the rigid connection appears to be a quasi-rigid connection, bending-open under the violence of the force exerted by the cow.

In this way the invention provides an excellent protection to the expensive apparatus involved in an automatic milking system and in which the typical behaviour of animals, where this apparatus is being used, has amply been considered.

## Claims

1. A cluster-remover for a milking cluster with accessories, comprising, when operatively mounted, a horizontally positioned piston-cylinder assembly (17, 18) acting as a cluster-lifting mechanism, a valve (12) cooperating therewith for admitting or obturating vacuum to the cylinder (17), and a milk flow indicator (13), that controls said valve electronically, the accessories (valve and indicator) being located within a separate casing, said piston being provided with a wind-up system including at least a pulley (21), rigidly connected to the cylinder, and a pulley (19), rigidly connected to the piston, around which pulleys a string (22) is passed, of which the leading end is connected to the cylinder, and the trailing end carries the cluster suspended thereon, characterized in that said separate casing functions as supporting frame (16) for the cylinder (17) of the piston-cylinder assembly (17, 18) and that this supporting frame (16) is detachably connected, through a horizontally swingable suspension means (61, 62), to a bearing block (66) rigidly mounted on the piping system in the cow shed, in which a semi-rigid, semi-flexible direct connection exists between the cylinder (17) and supporting frame (16) or between the supporting frame (16) and bearing block (66).

2. A cluster-remover according to claim 1, characterized in that said semi-rigid, semi-flexible connection is established between the supporting frame (16) and the cylinder (17), said connection being in abnormal operation partially breakable, whereas the cylinder (17) is constantly subjected to a biasing force in the direction of the supporting frame (16).

3. A cluster-remover according to claim 2, characterized in that after the milking operation during the drawing-in of the piston (18) plus pulling string (22), in normal operation, the biasing force on the piston is increased with a force to be derived from the vacuum on the back side of the piston, which vacuum is interrupted in abnormal operation.

4. A cluster-remover according to claim 2 or 3, characterized in that the end of the cylinder (17) facing the supporting frame (16) cooperates with the opposite surface of the supporting frame under the influence of said biasing force and in sealing relationship therewith through a centring tongue and groove (31, 33) engagement.

5. A cluster-remover according to claim 4, characterized in that the cylinder (17) is resiliently connected to the supporting frame (16) by means of one or more tension springs (34) disposed along its circumference.

6. A cluster-remover according to claim 4, characterized in that the cylinder (17) is coupled resiliently to the supporting frame (16) by means of a cable, string or the like, with counterweight (38, 39).

7. A cluster-remover according to any of claims 4—6, characterized in that on the lifting tube, near its end facing the supporting frame a flange (28) is mounted provided with an annular centring edge of resilient, sealing material (44, 47).

8. A cluster-remover according to any of claims 4—6, characterized in that the cylinder (17), near its end facing the supporting frame (16), is provided with a centring edge (48, 52) cooperating with a relatively wide centring groove (46, 56) in the supporting frame, while on the outer side of the cylinder a resilient sealing ring (49, 57) is provided that cooperates with the surface of the supporting frame surrounding the centring groove.

9. A cluster-remover according to claim 8, characterized in that around the end of the cylinder (17) facing the supporting frame (16) and around the biasing means is disposed a sleeve (53) mounted on said cylinder.

10. A cluster-remover according to claim 7 or 8, characterized in that the sealing ring (57) is provided with a slanting, projecting annular lip (59), resting, in the equilibrium state of the cylinder (17) against the supporting frame (16).

11. A cluster-remover according to any of the preceding claims in which the supporting frame (16) is pivotable around a vertical axis, which frame is provided with trunnions (61, 62) to be suspended in bearings (63, 64) in the bearing block (66), characterized in that each bearing is provided with an opening (71) having a radially outwards extending slot (72) or reduced area.

12. A cluster-remover according to claim 11, characterized in that the bearing block (66), comprises a spring-loaded, adjustable, horizontal support (78), on which the supporting frame (16) or part thereof is resting in mounted position for relieve of the trunnions (61, 62) in the bearings (63, 64).

13. A cluster-remover according to claim 12, characterized in that the horizontal supporting plate is constituted by one (64') of the bearings, which acts as hinge by rotating about an axle (89), around which a torsion spring (81') is wound for supplying the repelling force.

14. A cluster-remover according to any of claims 11—13, characterized in that in the opening (71) of each bearing (63, 64) a metal bush (73) is provided connected to a supply or discharge of electrical current for direct transfer to the trunnions (61, 62) for the feeding of the electronic and electrical components of the cluster and accessories.

## Revendications

1. Séparateur de faisceau pour faisceau de traite avec ses accessoires, comprenant, lorsqu'il est monté de façon à fonctionner

— un ensemble de piston-cylindre (17, 18) placé horizontalement agissant comme mécanisme de levage de faisceau,

— une valve (12) coopérant avec cet ensemble pour admettre ou couper le vide vers le cylindre (17) et

— un indicateur d'écoulement de lait (13) qui contrôle la dite valve de façon électronique, les accessories (valve et indicateur) étant placés à l'intérieur d'un boitier séparé, ledit piston étant pourvu d'un système de remontage comprenant au moins une poulie (21), reliée de façon rigide au cylindre (17), et une poulie (19), reliée de façon rigide au piston (18), poulies autour desquelles on passe une corde (22) dont l'extrémité qui est tirée, est reliée au cylindre tandis que l'extrémité, qui tire, porte le faisceau qui lui est suspendu, caractérisé par le fait que ledit boitier joue le rôle de bâti support (16) pour le cylindre (17) de l'ensemble piston-cylindre (17, 18) et que ce bâti support (16) est relié de façon détachable, par un moyen de suspension susceptible de virer horizontalement (61, 62) à un block palier (66) monté rigidement sur le système de tuyauterie dans l'étable à vaches, dans laquelle une connexion directe semi-rigide, semi-flexible existe entre le cylindre (17) et le bâti support (16) ou entre le bâti support (16) et le bloc palier (66).

2. Séparateur de faisceau, tel que défini dans la revendication 1, caractérisé par le fait que ladite connexion semi-rigide, semi-flexible est établie entre le bâti (16) et le cylindre (17) la dite connexion étant, en fonctionnement anormal, partiellement susceptible d'être interrompue, grâce au fait que le cylindre (17) est constammant soumis à une force de décentrage dans la direction du bâti support (16).

3. Séparateur de faisceau, tel que défini dans la revendication 2, caractérisé par le fait qu'après l'opération de traite pendant le retrait du piston (18) et donc de la corde de traction (22), en fonctionnement normal. La force de décentrage sur le piston est augmentée d'une force provenant du vide sur la face arrière du piston, lequel vide est interrompue en fonctionnement anormal.

4. Séparateur de faisceau tel que défini dans l'une ou l'autre des revendications 2 ou 3, caractérisé par le fait que l'extrémité du cylindre (17) dirigée vers le bâti support (16) coopère avec la surface opposée du bâti support sous l'influence de ladite force de décentrage et se trouve en position d'obturation grâce au contact d'une languette avec une rainure de centrage (31, 33).

5. Séparateur de faisceau tel que défini dans la revendication 4, caractérisé par le fait que le cylindre (17) est relié de façon élastique au bâti support (16) au moyen d'un ou plusieurs ressorts de tension (34) disposés le long de sa circonférence.

6. Séparateur de faisceau tel que défini dans la revendication 4, caractérisé par le fait que le cylindre (17) est couplé de façon élastique au bâti support (16) au moyen d'un câble, corde ou similaire avec un contrepoids (38, 39).

7. Séparateur de faisceau tel que défini dans l'une quelconque des revendication 4 à 6, caractérisé par le fait que, sur le tube de levage, près de son extrémité orientée vers le bâti support, on monte une collerette (28) pourvue d'un bord de centrage annulaire de matière élastique assurant l'étanchéité (44, 47).

8. Séparateur de faisceau tel que défini dans l'une quelconque des revendications 4 à 6, caractérisé par le fait que le cylindre (17), près de son extrémité orientée vers le bâti support (16), est pourvu d'un bord de centrage (48, 52) coopérant avec une rainure de centrage relativement large (46, 56) dans le bâti support, tandis que sur le côté extérieur du cylindre, on prévoit un anneau d'étanchéité elastique (49, 57) qui coopère avec la surface du bâti support entourant la rainure de centrage.

9. Séparateur de faisceau tel que défini dans la revendication 8, caractérisé par le fait qu'autour de l'extrémité du cylindre (17) orientée vers le bâti support (16) et autour du moyen de décentrage, on dispose un manchon (53) monté sur ledit cylindre.

10. Séparateur de faisceau tel que défini dans la revendication 7 ou la revendication 8, caractérisé par le fait que l'anneau d'étanchéité (57) est pourvu d'un biseau réalisant une lèvre annulaire en saillie (59) reposant, dans l'état d'équilibre dy cylindre (17), contre le bâti support (16).

11. Séparateur de faisceau tel que défini dans l'une quelconque des revendications précédentes, dans lequel le bâti support (16) est susceptible de pivoter autour d'une axe vertical, lequel bâti est pourvu de tourillons (61, 61) qui sont destinés à être suspendus dans les paliers (63, 64) dans le bloc palier (66), caractérisé par le fait que chaque palier est pourvu d'une ouverture (71) possédant une fente (72) de surface réduite se prolongeant radialement vers l'extérieur.

12. Séparateur de faisceau tel que défini dans la revendication 11, caractérisé par le fait que le bloc palier (66) comporte un support horizontal (79) réglable, tiré par un ressort sur lequel la bâti support (16) ou une partie de celui-ci repose dans la position montée pour soulager les tourillons (61, 62) dans les paliers (63, 64).

13. Séparateur de faisceau tel que défini dans la revendication 12, caractérisé par le fait que la plaque de support horizontale est constituée par l'un (64') des paliers, qui agit comme une charnière en tournant autour d'un axe (89), autour duquel un ressort de torsion (81') est enroulé pour réaliser la force de répulsion.

14. Séparateur de faisceau tel que défini dans l'une quelconque des revendications 11 à 13, caractérisé par le fait que dans l'ouverture (71) de chaque palier (63, 64) on prévoit un coussinet métallique (73) relié à une source ou à une évacuation de courant électrique pour le transfert direct vers les tourillons (61, 62) destinée à l'alimentation des composants electroniques et électriques du faisceau et de ses accessoires.

## Patentansprüche

1. Melkbecher-Wechselaggregat für ein Melkbecher-Aggregat mit Zubehör, bestehend aus — falls arbeitswirksam montiert — einer horizontal angeordneten Kolben-Zylinder-Einheit (17, 18) als Saugpumpen-Einrichtung, einem mit dieser zusammenarbeitenden Ventil (12) zum Öffnen bzw. Abschließen des Vakuums zu dem Zylinder (17) und einem Milch-Strömungsanzeiger (13), der das Ventil elektronisch steuert, wobei die Zubehörteile (Ventil und Strömungsanzeiger) in einem gesonderten Gehäuse untergebracht sind, und wobei der Kolben mit einer Aufwickeleinrichtung verbunden ist, die zumindest eine mit dem Zylinder starr verbundene Seilrolle (21) und eine mit dem Kolben starr verbundene Seilrolle (19) umfaßt, um die (19, 21) ein Seil (22) geführt ist, dessen steuerseitiges Ende mit dem Zylinder verbunden ist, dessen lastseitiges Ende das daran hängende Melkbecherbüschel trägt, dadurch gekennzeichnet, daß das gesonderte Gehäuse als Stützrahmen (16) für den Zylinder (17) der Kolben-Zylinder-Einheit (17, 18) ausgebildet ist, und daß der Stützrahmen (16) mittels eines horizontal schwingbaren Aufhängemittels (61, 62) mit einem Lagerbock (66) abnehmbar verbunden ist, welcher an dem Rohrleitungssystem des Kuhstalles starr montiert ist, in welchem Rohrleitungssystem eine halbstarre, halbflexible Verbindung zwischen dem Zylinder (17) und dem Stützrahmen (16), oder zwischen dem Stützrahmen (16) und dem Lagerbock (66) vorgesehen ist.

2. Melkbecher-Wechselaggregat nach Anspruch 1, dadurch gekennzeichnet, daß die halbstarre — halbflexible Verbindung zwischen dem Stützrahmen (16) und dem Zylinder (17) vorgesehen ist, wobei die Verbindung bei abnormalem Wirkzustand teilweise unterbrechbar ist, wenn der Zylinder (17) einer dauernden, Rückstellkraft in Richtung auf den Stützrahmen (16) ausgesetzt ist.

3. Melkbecher-Wechselaggregat gemäß Anspruch 2, dadurch gekennzeichnet, daß nach dem Melkvorgang während des Einziehens des Kolbens (18) und des Zugseiles (22) bei normalem Wirkzustand, die Rückstellkraft auf den Kolben erhöht wird durch eine Kraft, die von dem auf die Rückseite des Kolbens einwirkenden Vakuum herrührt, welches Vakuum in abnormaler Position unterbrochen wird.

4. Melkbecher-Wechselaggregat nach den Ansprüchen 2 oder 3, dadurch gekennzeichnet, daß das Ende des Zylinders (17) gegenüber Stützrahmen (16) mit der gegenüberliegenden Oberfläche des Stützrahmens unter der Wirkung der Rückstellkraft und mit Bezug auf die gegenseitige Abdichtung in einer Nut-Feder-Verzahnung (31, 33) zusammenwirkt.

5. Melkbecher-Wechselaggregat nach Anspruch 4, dadurch gekennzeichnet, daß der Zylinder (17) mit dem Stützrahmen (16) mittels einer oder mehrerer, entlang seinem Umfang angeordneter Spannfedern (34) elastisch verbunden ist.

6. Melkbecher-Wechselaggregat nach Anspruch 4, dadurch gekennzeichnet, daß der Zylinder (17) mit dem Stützrahmen (16) mit Hilfe eines Seilzuges oder dgl. mit Gegengewicht (38, 39) elastisch verbunden ist.

7. Melkbecher-Wechselaggregat gemäß einem der Ansprüche 4 bis 6, dadurch gekennzeichnet, daß an dem Zylinder (17) nahe seinem gegenüber dem Stützrahmen befindlichen Ende ein Flansch (28) mit einer ringförmigen Zentrierstufe (44, 47) aus elastischem Dichtungsmateriel montiert.

8. Melkbecher-Wechselaggregat nach einem der Ansprüche 4 bis 6, dadurch gekennzeichnet, daß der Zylinder (17) nahe seinem dem Stützrahmen (16) gegenüber befindlichen Ende eine Zentrierstufe (48, 52) aufweist, die mit einer relativ weiten Zentriernut (46, 56) im Stützrahmen zusammenwirkt, während an der äußeren Seite des Zylinders ein elastischer Dichtungsring (49, 57) angebracht ist, der mit der die Zentriernut umgebenden Oberfläche des Stützrahmens zusammenwirkt.

9. Melkbecher-Wechselaggregat nach Anspruch 8, dadurch gekennzeichnet, daß um das Ende des Zylinders (17) gegenüber dem Stützrahmen (16) und um die Rückstellmittel eine an dem Zylinder angebrachte Muffe (53) angeordnet ist.

10. Melkbecher-Wechselaggregat nach einem der Ansprüche 7 oder 8, dadurch gekennzeichnet, daß der Dichtungsring (57) mit einer schräg auskragenden kreisförmigen Lippe (59) versehen ist, die in Gleichgewichtslage des Zylinders (17) gegen den Stützrahmen anliegt.

11. Melkbecher-Wechselaggregat nach einem der vorangehenden Ansprüche, bei der der Stützrahmen (16) um eine senkrechte Achse schwenkbar ist, welcher Rahmen mit Lagerzapfen (61, 62), die in Lagern (63, 64) im Lagerblock (66) ruhen, versehen ist, dadurch gekennzeichnet, daß jedes Lager mit einer Öffnung (71) versehen ist, die einen radial nach außen gerichteten Spalt (72) von reduziertem Querschnitt aufweist.

12. Melkbecher-Wechselaggregat nach Anspruch 11, dadurch gekennzeichnet, daß der Lagerblock (66) einen federbelasteten, einstellbaren, horizontalen Support (79) aufweist, auf dem der Stützrahmen (16) oder ein Teil desselben in montiertem Zustand ruht, um die Belastung der Lagerzapfen (61, 62) in die Lager (63, 64) zu erleichtern.

13. Melkbecher-Wechselaggregat nach Anspruch 12, dadurch gekennzeichnet, daß der horizontale Support von einem (64') der Lager gebildet ist, welches als Gelenk wirksam ist, indem es um eine Achse (89) drahbar ist, um welche eine Torsionsfeder (81') als Rückstellkraft gewickelt ist.

14. Melkbecher-Wechselaggregat nach einem der Ansprüche 11 bis 13, dadurch gekennzeichnet, daß in der Öffnung (71) jedes

17　　　　　**0 001 667**　　　　　18

Lagers (63, 64) ein Metallfutter (73) vorgesehen ist, das mit einem Anschluß zum Einleiten bzw. Ableiten von elektrischem Strom für direkte Übertragung auf die Lagerzapfen (61, 62) zwecks Versorgung der elektrischen und elektronischen Einrichtungen der Vorrichtung und ihrer Zubehörteile vorgesehen ist.

FIG. 1

0 001 667

FIG.2

FIG.3

**0 001 667**

## FIG.4

## FIG.5

## FIG.6

## FIG.7

## FIG.8

## FIG. 9

## FIG. 10

3

**0 001 667**

FIG. 11

detail XIII

4

# FIG. 12

# FIG.13

0 001 667

FIG.13A

7